# EUROPEAN PATENT APPLICATION

(11) **EP 2 159 557 A1**
(43) Date of publication of application: **03.03.2010**
(21) Application number: 08105170.8
(22) Date of filing: 28.08.2008
(51) Int. Cl.: G01K 13/00

(54) **Clinical electronic thermometer and method of operation thereof**

(71) Applicant: Microlife Intellectual Property GmbH, 9443 Widnau (CH)
(72) Inventor: Ho, Chia-Chen, 103, Taipei City (TW)
(74) Representative: Hepp, Dieter

(57) **Abstract**

A clinical electronic thermometer and a method of operation of a clinical electronic thermometer with a display comprising the steps of audibly and visually signalling at least one of readiness for measurement and end of measurement, whereas the audible signalling (B1, B2) and the visual signalling (BL1, BL2) are set apart for a predefined delay time (T1, T2).

## Description

The present invention relates to battery operated clinical electronic thermometers and a method to operate a battery operated clinical thermometer.

Clinical electronic thermometers and ways to operate them are well known in prior art.

US5829878 describes a digital fever thermometer which includes a backlit LCD display. The backlit LCD display may be used beneath an audible signal as an annunciator indicating that a stable temperature has been achieved. The digital fever thermometer further includes a photo detector to decide depending on the ambient light if the backlight should be enabled.

W02007002609 describes a similar electronic thermometer with a backlit display, whereas the colour of the backlight will change depending on the temperature measured. Different colours correspond to different temperature ranges, e.g. normal, slightly increased temperature or fever.

One major disadvantage of the prior art clinical electronic thermometers is the high consumption of electrical energy and the need to often replace the battery.

It's an object of the present invention to overcome the disadvantages of the devices known in prior art.

A clinical electronic thermometer within this document is a thermometer comprising a body, a tip to contact the skin, e.g. of a person whose temperature shall be measured, an electronic element, e.g. a thermistor within the tip to detect the temperature, a display to indicate the measured value, a user interface to at least turn on the thermometer, an electronic controller to operate the thermometer and a battery for power supply.

A first aspect of the present invention is a method of operation of a clinical electronic thermometer with a display. The method of operation comprises the steps of audibly and visually signalling to the operating person readiness for measurement after switching on of the thermometer and/or end of measurement, e.g. when the temperature is no longer substantially increasing. Both audible signalling and visually signalling are power consuming and cause an additional load to the battery, which can result in a significant voltage drop when applied together. In order to save battery life, the audible signalling and the visual signalling are not activated at the same time but are set apart for a predefined delay time. The later signalling will only start after a predefined delay time after the first signalling has ended.

This predefined delay time between the visual and the audible signal might be different for indicating readiness for measurement and end of measurement. The delay time to indicate readiness for measurement might be between 50ms and 1s, preferably between 75ms and 250ms, most preferably between 100ms and 150ms. Whereas the delay time to indicate end of measurement might be different and between 0.25s and 2s, preferably between 0.5s and 1.5s, most preferably between 0.75s and 1.25s. Other delay times are possible.

Since audible signals are noticed without the need for the operating person to expressly concentrate on the signal, the visual signalling might be performed after audible signalling.

The audible signalling can be a continuous beep for a predefined time or can consist of a number of multiple beeps. Playing a short melody might also be possible. Accordingly also the visual signalling can be performed by showing a special symbol on the display, by activating or flashing the display or backlighting the display. Other ways of signalling are feasible.

An additional embodiment of the present invention is that the operation method for a clinical electronic thermometer further comprises a step of low battery detection. The low battery detection basically consists of a measurement of the voltage of the battery at specific moments during operation of the thermometer.

The step of low battery detection can be performed before and/or after signalling readiness for measurement. This will indicate directly after turning on of the thermometer and after the first load on the battery, if there is still enough battery power to complete a temperature measurement. Additionally the step of low battery detection can also be performed at a moment before and/or after signalling end of measurement.

To prevent readings during a time where the voltage still is unstabel, the step of low battery detection can be performed a predefined recovery time after signalling readiness for measurement and/or end of measurement. This recovery time is between 0.5s and 2s, preferably between 0.75s and 1.5s, most preferably 1s. Other recovery times are possible.

Additionally, the step of low battery detection can also be performed at a moment during visually signalling readiness for measurement and/or end of measurement.

Different readings of battery level respectively measuring the battery voltage at different moments, e.g. before, after and/or during signalling, allow a more specific analysis of the remaining battery capacity. In an additional embodiment of the present invention different power saving measures are initiated depending on the battery voltage levels measured at different moments and depending on those measurements being below a first and/or second threshold value. In an additional embodiment of the present invention depending on the moment of performance of the low battery detection step the voltage measured is compared to a first or second threshold value and depending on the measured value being below the corresponding threshold value, different power saving measures are initiated.

When the battery level at a measurement moment before and/or after signalling falls below a first threshold value, the display might show an empty battery icon and further operation might be disabled. When the battery level at a measurement moment during signalling falls below a second threshold value, the empty battery icon might flash in the display and the backlighting of the display might be disabled. Operation is still possible but the flashing empty battery icon and the disabled backlighting will remind the user to replace the battery.

Although the step of low battery level detection preferably is performed at specific moments in conjunction with signalling by the thermometer, it can also be performed independently of a signalling. Different power saving measures might be initiated upon the battery voltage level detected being below a first or second threshold value.

Additionally, the readings of the battery level respectively measuring the battery voltage can also be performed at predefined moments or in dependence of the occurrence of certain events, whereas each moment has a corresponding first or second threshold value, which are different from each other. Different power saving measures might be initiated when the battery voltage level at such a predefined moment is below its corresponding threshold value. The predefined moment does not need to be a fixed moment in time but may also be triggered by internal or external events, such as e.g. generation of audible and/or visual signals by the thermometer.

When operating the thermometer with a nominal battery voltage of 3V, the first threshold value might be between 2.7V and 2.9V, preferably 2.8V. The second threshold value might be between 2.2V and 2.4V, preferably 2.3V. Other values are feasible. It is also possible to have multiple threshold values.

A further aspect of the present invention is a clinical electronic thermometer with means for audibly and visually signalling readiness for measurement and/or end of measurement and with a controller to control operation of the thermometer. According to the invention, the controller is designed such that the audible signalling and the visual signalling are generated at times set apart for a predefined delay time. The later signalling will only start after a predefined delay time after the first signalling has ended. Both audible signalling and visually signalling consume a significant amount of battery power, which can result in considerable voltage drops when applied together. To prevent such voltage drops, the controller prohibits audible and visual signalling at the same time but sets them apart for a predefined delay time.

This predefined delay time is between 50ms and 1s, preferably between 75ms and 250ms, most preferably between 100ms and 150ms for signalling readiness for measurement. The predefined delay time is between 0.25s and 2s, preferably between 0.5s and 1.5s, most preferably between 0.75s and 1.25s for signalling end of measurement. Other delay times are possible.

A user of the electronic thermometer might not at all times watch the display of the thermometer. To gain the users attention, audible signalling is activated prior to visual signalling.

The controller of the clinical electronic thermometer might further be designed such as to measure a battery voltage level at predefined measuring moments. These predefined measuring moments comprise at least one of:
- before signalling readiness for measurement,
- between 0.5s and 2s, preferably between 0.75s and 1.5s, most preferably 1s, after signalling readiness for measurement,
- before signalling end of measurement,
- between 0.5s and 2s, preferably between 0.75s and 1.5s, most preferably 1s, after signalling end of measurement,
- during visually signalling readiness for measurement and
- during visually signalling end of measurement.

Additional and different measuring moments are possible.

The controller of the clinical electronic thermometer might further be designed such as to activate different power saving measures depending on the measuring moment and the corresponding battery voltage level detected being below a first or a second threshold value.

When the battery level at a measurement moment before and/or after signalling falls below a first threshold value, the display might show an empty battery icon and further operation will be disabled. When the battery level at a measurement moment during signalling fall below a second threshold value, the empty battery icon might flash in the display and the backlighting of the display might be disabled. Operation is still possible but the flashing empty battery icon and the disabled backlighting will remind the user to replace the battery. Other power saving methods are possible.

Although the controller of the clinical electronic thermometer preferably is designed such as to measure the battery voltage level at specific moments in conjunction with a signalling of the thermometer, it is also possible to measure independent of a signalling. The controller might be designed such as to activate different power saving measures depending on the battery voltage level detected being below a first or second threshold value.

Additionally, the controller might be designed such as to measure a battery voltage level at predefined, each having a corresponding threshold value and to activate different power saving measures depending on the battery voltage level detected being below its corresponding threshold value.

When operating the thermometer with a nominal battery voltage of 3V, the first threshold value might be between 2.7V and 2.9V, preferably 2.8V. The second threshold value might be between 2.2V and 2.4V, preferably 2.3V. Other values are feasible.

The invention will now be explained in more detail with reference to the embodiments and the accompanying drawings which show:
- **Figure 1:**: a voltage chart of a prior art clinical electronic thermometer.
- **Figure 2:**: a voltage chart of a clinical electronic thermometer according to the present invention.
- **Figure 3:**: the voltage chart according to figure 2 showing the measurement points.
- **Figure 4:**: a clinical electronic thermometer according to the present invention.
- **Figure 5:**: a flow chart of the operation of a clinical electronic thermometer according to the present invention.

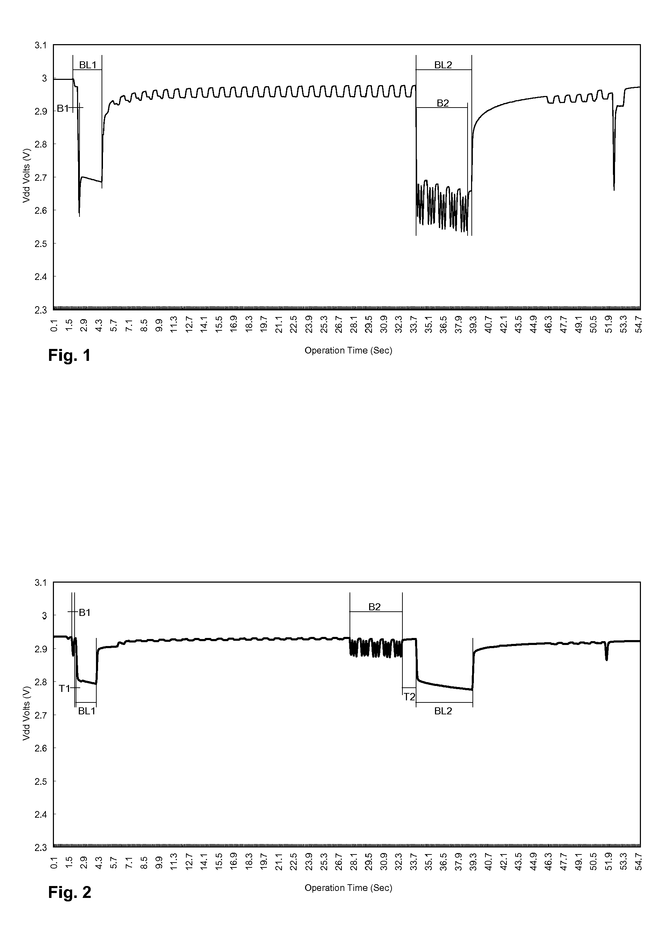

**Figure 1** shows a voltage chart of a prior art clinical electronic thermometer with a nominal battery voltage of 3V. The characteristic of this thermometer is that the audible and visual signals always come together resulting in a significant voltage drop. Approximately 1.5s after turning on the thermometer, a short beep B1 together with backlighting BL1 the display during approximately 2s indicates that the device is ready for measurement. The measurement of the temperature starts. As soon as the temperature of the measuring tip of the thermometer reaches substantially the same temperature as the body temperature to be measured, the measuring values will be increasing less than a predefined amount. The thermometer then signals end of measurement by multiple beeps B2 simultaneously with backlighting BL2 the display for approximately 5s.

This simultaneous beep B1, B2 and backlighting BL1, BL2 with its increased power consumption results in a significant drop of battery voltage as can be seen in the chart of figure 1. In case that the battery is new, this drop of battery voltage will have no further effect on the operation of the thermometer. But if the capacity of the battery is already reduced, the additional power consumption will drop the battery voltage below a low battery level threshold, resulting in an early disablement of operation and thus the need to replace the battery.

In **figure 2** a voltage chart of a clinical electronic thermometer according the present invention is shown. The nominal battery voltage of the thermometer is 3V. The audible signalling and the visual signalling are separated by a short delay time T1, T2, thus preventing unnecessary voltage drop of the battery. Similar as in figure 1, approximately 1.5s after turning on of the thermometer a short beep B1 is activated in order to obtain the attention of the user. According to the present invention, the visual signalling, e.g. the backlighting BL1 for 1.5s is only activated after a short delay time T1 after the end of the beep B1. The duration of this delay T1 is 125ms, but other durations are possible. By strictly separating both types of signalling B1, BL1, the power consumption of the audible signalling B1 and the visual signalling BL1 each create separate voltage drops which are not added together. Therefore the risk to fall below a low battery threshold value of the battery voltage is reduced. After visually signalling BL1 readiness for measurement, the measurement of the temperature will start. When the measurement is finished respectively when the temperature of the thermometer tip does no longer substantially increase, the thermometer will signal end of measurement. Audible signalling in the form of multiple beeps B2 will gain the users attendance. After a delay time T2 of 1s after the end of the beep B2, the display is backlit BL2 for 5s, such that the temperature measured can be read easily.

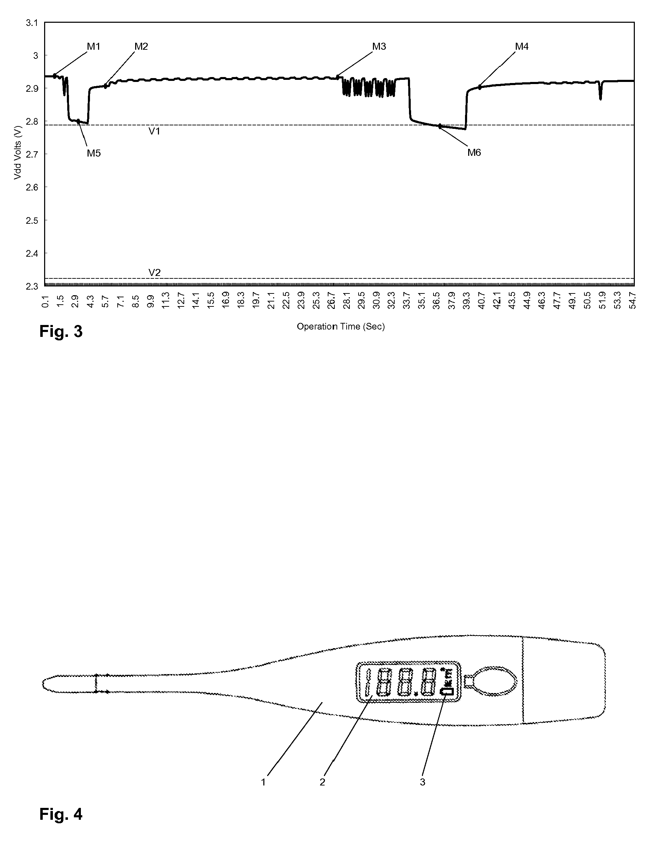

**Figure 3** shows the same voltage chart of a clinical electronic thermometer according the present invention as in figure 2. Additionally different markers M1, M2, M3, M4, M5, M6 are set to indicate moments of determination of the battery voltage. These measuring moments of M1, M2, M3, M4, M5 and M6 together with its corresponding measurement values are used to initiate different power saving measures. When the battery voltage measured before and after signalling readiness for measurement at moments M1, M2 and/or measured before and after signalling end of measurement at moments M3, M4 is below a first threshold value V1, then a empty battery icon will be shown in the display of the thermometer and further operation of the thermometer is disabled. In case the battery voltage measured at moments M5, M6 during backlighting BL1, BL2 drops below a second threshold value V2, then the backlighting BL1, BL2 will be disabled and the empty battery icon is flashing in the display only. Further operation of the thermometer is not influenced and temperature measurements are still possible. Values for first and second thresholds V1, V2 are 2.8V and 2.3V respectively. Other values are possible.

In **figure 4** a clinical electronic thermometer 1 according the present invention is shown. The overall look of the thermometer is well known from prior art. The body of the thermometer 1 exhibits a display 2 to indicate the temperature measured. Within the display 2 of the thermometer, an empty battery icon 3 is integrated. This icon 3 will be permanently activated when the battery voltage is below the first threshold value. The empty battery icon 3 will be shown flashing on and off when the battery voltage during backlighting is below the second threshold value. Although operation is still possible when the empty battery icon is flashing, this together with the disabled backlighting of the display is an indication that the battery needs to be replaced.

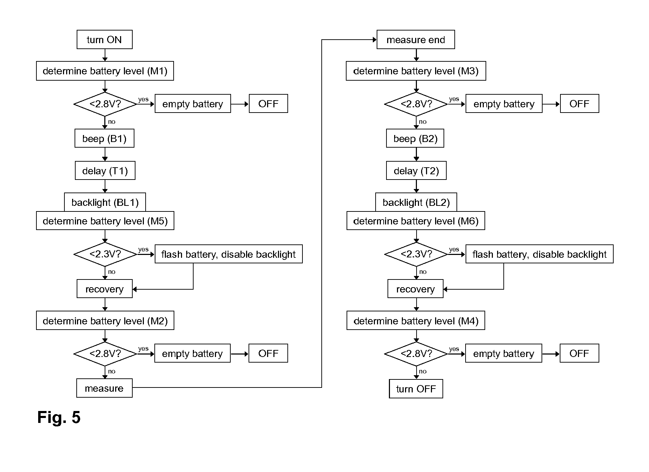

In **figure 5** a flow chart of the operation of a clinical electronic thermometer according to the present invention is shown.

The nominal battery voltage of the described embodiment is 3V. The first and the second threshold values V1 and V2 are 2.8V and 2.3V respectively. However, different nominal battery voltages as well as different first and second threshold values are possible.

When the thermometer is turned on by the user, the battery voltage level is determined corresponding to measuring moment M1.

If the battery level is below 2.8V, then the empty battery icon is shown in the display and the thermometer is turned off. If the battery level is equal or above 2.8V, a beep B1 and a backlighting of the display BL1 after a delay T1 after the end of the beep B1 signals readiness for measurement. During the backlighting of the display BL1, the battery level is determined corresponding to measuring moment M5.

If the battery level is below 2.3V, then the empty battery icon is flashing and the backlighting is disabled. Further operation is unaffected. If the battery level is equal or above 2.3V, then the backlighting is stopped after 1.5s only and the battery level is determined again following a recovery time of 1s, corresponding to measuring moment M2.

If the battery level is below 2.8V, then the empty battery icon is shown in the display and the thermometer is turned off. If the battery level is equal or above 2.8V, the temperature measurement is performed.

Optionally, after the measurement is performed, the battery level is determined corresponding to measuring moment M3. If the battery level is below 2.8V, then the empty battery icon is shown in the display and the thermometer is turned off. If the battery level is equal or above 2.8V, normal operation continues.

A series of beeps B2 and a backlighting BL2 of the display after a delay T2 after the last beep signals end of measurement. The measured temperature is shown in the display. During the backlighting BL2 of the display, the battery level is determined corresponding to measuring moment M6.

If the battery level is below 2.3V, then the empty battery icon is flashing and the backlighting is disabled. Further operation is unaffected. If the battery level is equal or above 2.3V, then the backlighting BL2 is continued for 5s.

Optionally, the battery level is determined again after a recovery time of 1s, corresponding to measuring moment M4. If the battery level is below 2.8V, then the empty battery icon is shown in the display and the thermometer is turned off. If the battery level is equal or above 2.8V, normal operation continues.

The measured temperature is displayed until the thermometer is turned off.

## Claims

1. Method of operation of a clinical electronic thermometer with a display comprising the steps of audibly and visually signalling at least one of readiness for measurement and end of measurement, **whereas** the audible signalling and the visual signalling are set apart for a predefined delay time (T1, T2).

2. Method of operation of a clinical electronic thermometer according to claim 1, **characterised in that** said predefined delay time (T1) is between 50ms and 1s, preferably between 75ms and 250ms, most preferably between 100ms and 150ms for signalling readiness for measurement.

3. Method of operation of a clinical electronic thermometer according claim 1 or 2, **characterised in that** said predefined delay time (T2) is between 0.25s and 2s, preferably between 0.5s and 1.5s, most preferably between 0.75s and 1.25s for signalling end of measurement.

4. Method of operation of a clinical electronic thermometer according to one of the claims 1 to 3, **characterised in that** visual signalling is performed after audible signalling.

5. Method of operation of a clinical electronic thermometer according to one of the claims 1 to 4, further comprising a step of low battery detection.

6. Method of operation of a clinical electronic thermometer according to claim 5, **characterised in that** the low battery detection step is performed at least at a moment (M1, M2) selected from before and after signalling readiness for measurement.

7. Method of operation of a clinical electronic thermometer according to claim 5 or 6, **characterised in that** the low battery detection step is performed at least at a moment (M3, M4) selected from before and after signalling end of measurement.

8. Method of operation of a clinical electronic thermometer according to one of the claims 5 to 7, **characterised in that** the low battery detection step is performed between 0.5s and 2s, preferably between 0.75s and 1.5s, most preferably 1s, after signalling at least one of readiness for measurement and end of measurement.

9. Method of operation of a clinical electronic thermometer according to one of the claims 5 to 8, **characterised in that** the low battery detection step is performed at a moment (M5, M6) during visually signalling at least one of readiness for measurement and end of measurement.

10. Method of operation of a clinical electronic thermometer according to one of the claims 5 to 9, **characterised in that** depending on the moment (M1, M2, M3, M4, M5, M6) of performance of the low battery detection step and a corresponding battery voltage level detected being below a first or second threshold value (V1, V2), different power saving measures are initiated.

11. Method of operation of a clinical electronic thermometer comprising a step of low battery detection, preferably according to one of the claims 5 to 10, **characterised in that** depending on performance of the low battery level detection step and a corresponding battery voltage level detected being below a first or second threshold value (V1, V2), different power saving measures are initiated.

12. Method of operation of a clinical electronic thermometer in particular according to claim 11, **characterised in that** a step of low battery detection is performed at least at two predefined moments (M1, M2, M3, M4, M5, M6), wherein for different moments low battery detection is carried out with respect to different threshold values (V1, V2) and that preferably different power saving measures are initiated depending on a battery voltage level detected being below its corresponding threshold value (V1, V2).

13. Clinical electronic thermometer (1) with means for audibly and visually signalling at least one of readiness for measurement and end of measurement and with a controller to control operation of the thermometer, **characterised in that** the controller is designed such that the audible signalling (B1, B2) and the visual signalling (BL1, BL2) are set apart for a predefined delay time (T1, T2).

14. Clinical electronic thermometer (1) according to claim 13, **characterised in that** said predefined delay time (T1) is between 50ms and 1s, preferably between 75ms and 250ms, most preferably between 100ms and 150ms for signalling readiness for measurement.

15. Clinical electronic thermometer (1) according to claim 13 or 14, **characterised in that** said predefined delay time (T2) is between 0.25s and 2s, preferably between 0.5s and 1.5s, most preferably between 0.75s and 1.25s for signalling end of measurement.

16. Clinical electronic thermometer (1) according to on of the claims 13 to 15, **characterised in that** the controller is designed such that the audible and visual signalling are set apart such that the visual signalling (BL1, BL2) is activated after the audible signalling (B1, B2).

17. Clinical electronic thermometer (1) according to on of the claims 13 to 16, **characterised in that** the controller is designed such as to measure a battery voltage level at predefined measuring moments (M1, M2, M3, M4, M5, M6).

18. Clinical electronic thermometer (1) according to claim 17, **characterised in that** said predefined measuring moments are at least one of
- before signalling readiness for measurement (M1),
- between 0.5s and 2s, preferably between 0.75s and 1.5s, most preferably 1s, after signalling readiness for measurement (M2),
- before signalling end of measurement (M3),
- between 0.5s and 2s, preferably between 0.75s and 1.5s, most preferably 1s, after signalling end of measurement (M4),
- during visually signalling readiness for measurement (M5) and
- during visually signalling end of measurement (M6).

19. Clinical electronic thermometer (1) according to claim 17 or 18, **characterised in that** the controller is designed such as to activate different power saving measures depending on the measuring moment (M1, M2, M3, M4, M5, M6) and a corresponding battery voltage level detected being below a first or second threshold value (V1, V2).

20. Clinical electronic thermometer (1) with a controller to control operation of the thermometer, preferably according to one of claims 17 to 19, **characterised in that** the controller is designed such as to measure the battery voltage level and to activate different power saving measures depending on the battery voltage level detected being below a first or second threshold value (V1, V2).

21. Clinical electronic thermometer (1) in particular according to claim 20, **characterised in that** the controller is designed such as to measure a battery voltage level at least at two predefined moments (M1, M2, M3, M4, M5, M6), wherein for different moments a battery voltage level is measured with respect to different threshold values (V1, V2) and preferably to activate different power saving measures depending on the battery voltage level detected being below its corresponding threshold value (V1, V2).
